# FASCICULE DE BREVET EUROPEEN

(11) **EP 3 853 080 B1**
(45) Date de publication et mention de la délivrance du brevet: **28.08.2024**
(21) Numéro de dépôt: 19790684.5
(22) Date de dépôt: 23.09.2019
(51) Int. Cl.: B60R 21/36

(54) **PROCÉDÉ ET SYSTÈME POUR COMMANDER LE DÉPLOIEMENT D'UNE STRUCTURE GONFLABLE EXTERNE DE SÉCURITÉ PIÉTON ÉQUIPANT UN VÉHICULE, ET ÉQUIPEMENT DE PROTECTION PIÉTON INTÉGRANT CE SYSTÈME**
VERFAHREN UND SYSTEM ZUR STEUERUNG DER AUSLÖSUNG EINER EXTERNEN, AUFBLASBAREN FUSSGÄNGERSCHUTZSTRUKTUR EINES FAHRZEUGS UND FUSSGÄNGERSCHUTZAUSRÜSTUNG MIT INTEGRATION DAS BESAGTEN SYSTEMS
METHOD AND SYSTEM FOR CONTROLLING THE DEPLOYMENT OF AN EXTERNAL INFLATABLE PEDESTRIAN SAFETY STRUCTURE EQUIPPING A VEHICLE, AND PEDESTRIAN PROTECTION EQUIPMENT INTEGRATING SAID SYSTEM

(30) Priorité: 21.09.2018 FR 1858579
(43) Date de publication de la demande: 28.07.2021
(73) Titulaire: Seva Technologies, 75009 Paris (FR)
(72) Inventeur: CORD, Paul Philippe, 75009 PARIS (FR); ZAHORSKI, Dorian, 92170 Vanves (FR); ALLANO, Sylvain, 91310 MONTLHÉRY (FR)
(74) Mandataire: IP Trust
(86) Numéro de dépôt international: PCT/FR2019/052215
(87) Numéro de publication internationale: WO 2020/058654

(56) Documents cités:
- EP-A1- 3 009 309
- EP-A1- 3 187 378
- US-A1- 2004 061 598

## Description

### Domaine de l'invention

La présente invention concerne un procédé pour commander le déploiement d'une structure gonflable externe de sécurité en particulier piéton équipant un véhicule.

Elle vise également un système de commande du déploiement d'une structure gonflable externe de sécurité piéton, mettant en oeuvre le procédé de commande selon l'invention, ainsi qu'une structure gonflable externe de sécurité piéton intégrant un tel système.

Le domaine de l'invention est celui de la sécurité des piétons en situation d'être heurtés ou renversés par des véhicules autonomes, semi-autonomes ou à délégation de conduite, individuels ou collectifs, ou par des véhicules guidés telles que des tramways. Par la sécurité piéton, nous entendons la protection des personnes mais le domaine de l'invention couvre aussi la prise en charge de tout types d'obstacles animaux, objet inerte.

### Etat de la technique

Le développement considérable des véhicules à délégation de conduite tendant vers les voitures autonomes ou semi-autonomes et des navettes autonomes conduit à soulever de façon accrue la question de la sécurité des piétons. Cette question se pose aussi avec le fort développement des tramways et des systèmes de mobilité guidés au coeur des zones urbaines.

L'aide à la conduite et à la conduite autonome vont drastiquement réduire la sévérité des accidents automobiles. Cependant, dans les villes en particulier, la coexistence de piétons et de toutes sorte d'instruments propres à la mobilité (vélos, trottinettes..) va maintenir des risques significatifs d'interaction entre ces divers éléments circulants.

Ces chocs, généralement à vitesse modérée <40Km/h, lorsqu'ils ne sont pas mortels, sont très handicapants pour les victimes pendant de longues années.

Jusqu'à présent, les constructeurs automobiles se sont principalement occupés de concevoir des avants de véhicule réduisant la sévérité du choc piéton, ce qui a d'ailleurs conduit à une relative uniformisation des calandres des véhicules qui sont devenues sensiblement verticales. Par ailleurs, certains constructeurs ont proposé des mécanismes de soulèvement de capot par mise en oeuvre des charges pyrotechniques adaptées, de coussins gonflables externes pour véhicule, mais ces systèmes assurent en fait une fonction d'amortissement de l'impact des seules parties hautes d'un piéton sur la carrosserie d'un véhicule sans parvenir systématiquement retenir ce piéton sur le véhicule provoquant alors un risque de sur-accident.

Le brevet US 7,630,806 divulgue un système de détection et de protection de piéton, mettant en oeuvre une structure gonflable externe équipant un véhicule. Ce système de détection et de protection comporte un coussin gonflable déployable à l'avant du véhicule, prévu pour amortir le choc d'un piéton contre le capot du véhicule et un filet prévu pour retenir ce piéton et ainsi lui évitant de passer au-dessus du véhicule. Ce système est commandé à partir d'un traitement de signaux issus de capteurs et analysés par un système de reconnaissance de forme qui peut intégrer des procédés d'intelligence artificielle.

Le brevet US 5,377,108 divulgue un système de prédiction d'impact équipant un véhicule automobile et mettant en oeuvre un réseau de neurones. En cas de prédiction d'impact, ce système de prédiction commande par anticipation le déploiement d'un airbag ou coussin gonflable.

Le document EP 3187378 A1 décrit un ensemble de sacs gonflables équipant un véhicule et dont le déploiement est commandable, mais ces sacs gonflables ne peuvent communiquer entre eux via des vannes ou évents. Ils disposent chacun d'un système de gonflage indépendant.

Ces systèmes de l'art antérieur présentent toutefois l'inconvénient de ne pas permettre une prise en charge personnalisée d'un piéton avant son impact contre le véhicule, et risquent de présenter une efficacité de protection limitée.

Le but de la présente invention est de remédier à ces inconvénients en proposant un procédé de commande du déploiement d'une structure gonflable externe de sécurité, qui réalise une prédiction d'impact associée à une reconnaissance personnalisée d'un piéton et commande cette structure gonflable de telle manière que le piéton soit pris en charge et retenu au sein de la structure gonflable jusqu'à l'arrêt du véhicule. Ce procédé permet plus généralement traiter le cas d'obstacles tels que piétons, personnes, animaux ou objets hors du véhicule et dont l'interaction est inévitable.

Il s'agit ainsi de proposer un procédé et un système de commande d'une structure gonflable externe de sécurité qui, comme la ceinture de sécurité dans le véhicule, puisse prendre en charge les piétons dans accidents les plus courants, qui, lorsqu'ils ne sont pas mortels, perturbent significativement la vie des victimes.

### Résumé de l'invention

Cet objectif est atteint avec un procédé pour commander le déploiement d'une structure gonflable externe de sécurité équipant un véhicule, comprenant :
- une étape de détection d'apparition soudaine d'un obstacle devant ledit véhicule, à partir d'un traitement de signaux issus d'un ou plusieurs capteurs équipant ledit véhicule, conduisant à produire des données de détection,
- une étape d'identification dudit obstacle comme étant un être humain ou animal et de localisation spatiale dynamique dudit être humain ou animal, à partir d'un traitement des données de détection, conduisant à produire des données d'identification et des données de localisation spatiale dynamique,
- une étape de calcul d'une stratégie de déploiement de ladite structure gonflable externe, à partir des données d'identification et des données de localisation spatiale dynamique, conduisant à générer des signaux de commande sélective (i) de gonflage d'une pluralité de sacs gonflables constituant ladite structure gonflable externe de sécurité et (ii) de positionnement dynamique de ladite structure gonflable.

Suivant l'invention, les sacs gonflables peuvent communiquer entre eux via des vannes ou évents, et les signaux de commande sélective sont agencés de façon à ce que ladite structure gonflable externe ainsi déployée reçoive ledit être humain ou animal et le retienne en son sein pendant une durée prédéterminée.

Avantageusement, le procédé de déploiement selon l'invention comprend en outre une étape de classement comportant un traitement des données de détection et/ou d'identification, agencé de façon à classer parmi une pluralité de catégories d'obstacles et de configurations prédéterminées ledit piéton ainsi identifié dans une catégorie d'obstacle piéton avec la stratégie de déploiement correspondante.

Dans une forme particulière de réalisation de l'invention, particulièrement appropriée pour une utilisation sur des véhicules routiers, les étapes de détection et d'identification sont réalisées au sein d'un système d'assistance à la conduite équipant le véhicule.

Le procédé de déploiement selon l'invention peut alors être mis en oeuvre au cours d'une séquence automatique de freinage d'urgence initiée en réponse à une détection d'obstacle piéton devant le véhicule.

L'étape de classement peut en outre avantageusement comporter un traitement de données d'expériences préalablement stockées dans une base de données d'apprentissage embarquée dans le véhicule ou accessible à distance depuis ce véhicule.

La base de données d'apprentissage peut être avantageusement alimentée, via un réseau de communication auquel le véhicule est connecté, par des données d'expérience collectées dans une communauté de véhicules équipés de systèmes de protection des piétons implémentant le procédé de commande de déploiement selon l'invention. La connexion peut être périodique ou bien sollicitée par le système de commande de déploiement ou par encore un système de gestion distant prévu pour assurer une mise à jour d'une flotte de véhicules ainsi équipés. Ces données doivent être validées préalablement par le constructeur ou l'autorité idoine.

Les étapes de classement et de calcul de stratégie de déploiement peuvent être réalisées au sein d'un système d'intelligence artificielle embarqué dans le véhicule.

Suivant un autre aspect de l'invention, il est proposé un équipement de protection piéton prévu pour équiper un véhicule, mettent en oeuvre le procédé de commande de déploiement selon l'invention, comprenant :
- une structure gonflable externe de sécurité agencée pour être déployée depuis l'avant dudit véhicule en réponse à une détection et à une identification d'un piéton apparaissant soudainement devant ledit véhicule,
- un dispositif générateur de gaz prévu pour gonfler ladite structure gonflable externe de sécurité,
- un système pour commander le déploiement de ladite structure gonflable externe de sécurité.
Suivant l'invention, la structure gonflable externe comporte une pluralité de sacs gonflables pouvant communiquer entre eux via des vannes ou évents et dont les gonflages respectifs par du gaz issu du générateur de gaz sont commandés sélectivement par le système de commande selon une stratégie de déploiement calculée à partir de données de détection et/ou d'identification du piéton, de façon à recevoir et retenir pendant une durée prédéterminée ledit piéton au sein de la structure gonflable externe.

Plusieurs modes de réalisation de commande sélective de remplissage des sacs peuvent être envisagés. Certains sacs peuvent être directement reliés à un générateur de gaz.=D'autres sacs reçoivent le gaz de gonflage issu d'un sac adjacent.

Les commandes sélectives peuvent être activées :
- soit par conception,
- soit sous la forme d'une commande préprogrammée avant le déploiement,
- soit par pilotage des composants pendant toutes les phases de mise en oeuvre du système de protection,
- soit par combinaison de ces trois modes d'activation.

Suivant l'invention, la mise en oeuvre du système de protection peut être commandée à partir d'un module de commande implémentant une stratégie de déploiement calculée par un système d'intelligence artificielle embarqué dans le véhicule.

Ainsi, le procédé de commande de déploiement selon l'invention est basé sur un apprentissage profond grâce aux essais dynamiques de mise au point, aux simulations effectuées à partir de ces essais et à une mise en commun des expériences d'un même groupe ou d'un groupe similaire. Le système de commande s'enrichit donc et accroit ses performances pendant toute la vie du véhicule. Cette démarche permet aussi de traiter les autres configurations: impacts à vitesse élevée, animaux ou objets, par exemple des bicyclettes, déjà ou non encore répertoriés, obstacles eux mêmes en mouvement.

Ce procédé de commande s'applique à tout type de véhicule, en particulier ayant une calandre verticale, mais aussi à tout type d'engins mobiles tels que des navettes, tramways ou bus. Le système de commande selon l'invention est ouvert et il constitue sa base de données en un seul ensemble comprenant l'expérience cumulée des données et mesures effectuées sur le véhicule et ceux de même catégorie, communicant entre eux pendant la phase de développement et lors de sa vie opérationnelle.

Cette base de données peut avantageusement inclure l'ensemble des essais dynamiques effectués en développement sur les différents types de mannequins et les différents types de véhicules, et l'ensemble des modélisations effectuées au moyen d'outils de simulation multi-physique.

Le système de commande de déploiement selon l'invention peut intégrer des données issues de sa propre expérience et celles de son groupe communicant. En particulier, dans le futur, les véhicules seront de moins en moins individuels mais plus généralement collectifs, favorisant une mise en commun des données.

Ainsi la qualité de l'identification de l'obstacle humain ou non, s'enrichit de l'expérience de tout le groupe, mais aussi de l'adaptation du système de protection à chaque cas identifié. Grâce à l'intelligence artificielle et à l'apprentissage profond, la sécurité des personnes sera ainsi améliorée de façon constante.

### Définitions

Sont indiquées ci-après des définitions de termes utilisés dans la description qui suit, pour désigner des composants de l'équipement de protection et du système de commande de déploiement selon l'invention :

### Piéton :

Une personne à pied, seule ou en groupe, debout ou au sol. Le service technique rendu au piéton peut ici s'étendre aux utilisateurs d'une bicyclette ou de tout autre mode de déplacement individuel, à des animaux ou à des objets inertes.

### Module de protection :

Un boitier contenant la structure gonflable et le système de génération de gaz fixé sur un véhicule.

### Structure gonflable externe :

Un ensemble de sacs gonflables pouvant communiquer entre eux et dont le gonflage peut être commandé sélectivement.

### Sac gonflable:

Une enveloppe gonflable, de forme variable, par exemple de forme tubulaire, pouvant recevoir un gaz de gonflage et pouvant communiquer avec un ou plusieurs autres sac(s) selon une stratégie de déploiement.

### Stratégie de déploiement :

Un ensemble de signaux de commande de vannes, *valves ou évents* de remplissage et d'actionneurs.

### Vanne :

un système d'ouverture/fermeture de passage de gaz commandé disposé entre un conduit d'amenée d'un gaz de gonflage et un sac gonflable ou entre deux sacs.

Ces vannes peuvent être munis d'un dispositif anti retour selon les besoins. Toutes les commandes des vannes sont reliées par fil ou tout autre système de connexion y compris fluidique, ou bien par voie non filaire en utilisant des techniques usuelles de communication radio. Dans un exemple particulier de réalisation, l'énergie d'activation de la commande d'une vanne est apportée par une capacité, via un système connu de bus. L'ordre d'activation est transmis par une puce électronique, un fil assurant le chargement des capacités, le contrôle de la qualité des circuits et la transmission des ordres à la puce.

### Valve ou évent :

Un système d'ouverture/fermeture de passage de gaz statique, disposé entre un conduit d'amenée d'un gaz de gonflage et un sac gonflable ou entre deux sacs, qui est normalement en mode fermé par un opercule (non communicant) et qui commute en mode ouvert (communicant) en réponse à une pression supérieure à un niveau de pression prédéterminé. La *valve ou l'évent* peuvent aussi être réalisés sous la forme d'une fuite calibrée pour différer la pressurisation du sac aval.

### Générateur de gaz :

Un système de génération de gaz pyrotechnique ou non. Le déploiement de la structure est assuré par le générateur de gaz. Certains sacs sont pressurisés par des gaz des autres sacs au-delà du fonctionnement du générateur. Dans certains cas des générateurs extérieurs peuvent être utilisés.

### Description technique détaillée

On comprendra mieux l'invention à la lumière de la description détaillée qui suit, en référence aux figures ci-dessous :
- la figure 1 illustre schématiquement un système de protection piéton selon l'invention en mode déployé, équipant un véhicule automobile,
- la figure 2 illustre schématiquement un système de protection piéton selon l'invention en mode déployé, équipant un autobus,
- la figure 3 est un schéma fonctionnel d'un exemple de réalisation d'un système de commande de déploiement selon l'invention,
- la figure 4 est un schéma synoptique d'un équipement de protection piéton selon l'invention, dans une configuration collaborative,
- la figure 5 illustre schématiquement une première configuration - en deux parties - d'une structure gonflable externe de sécurité, mise en oeuvre dans un équipement de protection piéton selon l'invention,
- la figure 6 illustre schématiquement une seconde configuration - en trois parties - d'une structure gonflable externe de sécurité, mise en oeuvre dans un équipement de protection piéton selon l'invention,
- les figures 7 et 8 illustrent schématiquement une cinématique de prise en charge d'un piéton par une structure gonflable externe de sécurité d'un équipement de protection piéton selon l'invention,
- la figure 9A représente schématiquement la structure géométrique d'une structure gonflable extérieure mise en oeuvre dans un équipement de protection piéton selon l'invention,
- la figure 9B est un chronogramme illustrant une commande sélective de parties spécifiques de la structure gonflable de la figure 9A, dans le cas d'une prise en charge d'un homme de grande taille,
- la figure 10A illustre schématiquement les zones de la structure gonflable de la figure 9A, qui seront activées dans le cas d'une détection et d'une prise en charge d'une femme de petite taille ou de petit gabarit,
- la figure 10B est un chronogramme illustrant une commande sélective de parties spécifiques de la structure gonflable de la figure 9A, dans le cas d'une prise en charge d'une femme de petit gabarit,
- la figure 11A illustre schématiquement les zones de la structure gonflable de la figure 9A, qui seront activées dans le cas d'une détection et d'une prise en charge d'un enfant,
- la figure 11B est un chronogramme illustrant une commande sélective de parties spécifiques de la structure gonflable de la figure 9A, dans le cas d'une prise en charge d'un petit enfant,
- la figure 12 illustre schématiquement plusieurs géométries de base pour réaliser une structure gonflable externe de sécurité mise en oeuvre dans un équipement de protection piéton selon l'invention,
- les figures 13A, 13B et 13C illustrent des exemples pratiques de réalisation d'une structure gonflable externe de sécurité,
- la figure 14 illustre schématiquement un mode particulier de réalisation d'un module de protection piéton intégrant un générateur de gaz et une structure gonflable en mode plié,
- la figure 15 illustre schématiquement un mode particulier de réalisation boitier contenant le générateur de gaz et sur lequel sont fixés la structure gonflable et les vannes d'alimentation,
- la figure 16 illustre schématiquement un mode particulier de réalisation d'une structure gonflable équipée de valves commandées, et
- les figures 17A et 17B illustrent respectivement un exemple d'intégration d'un module de protection piéton dans la face avant d'un véhicule et le déploiement de la structure gonflable externe initialement contenue dans le module de protection piéton.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

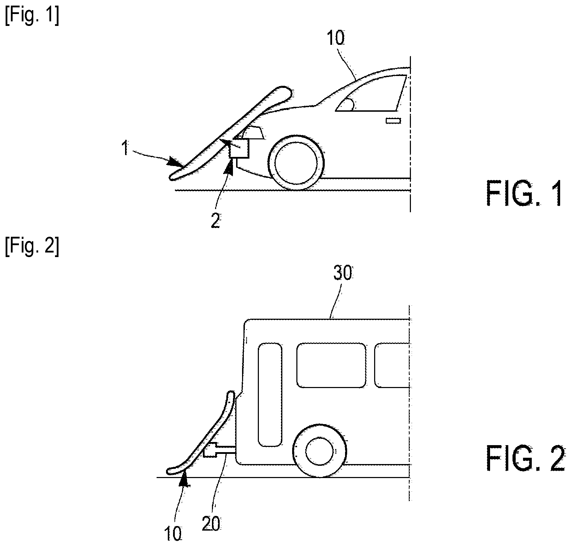

Des équipements de protection selon l'invention peuvent équiper un véhicule automobile léger (Figure 1) ou un véhicule de transport collectif 30 (Figure 2). Dans le premier cas, cet équipement de protection comprend un module de protection 2 intégré dans la face avant du véhicule et prévu pour réaliser le déploiement et le positionnement approprié d'une structure gonflable 1. Dans le second cas, l'équipement de protection comprend un module de protection intégré dans la face avant du véhicule de transport 30 et pourvu d'une pièce mécanique 20 de déploiement mobile en translation et actionnée pour déployer et positionner de manière appropriée une structure gonflable 10.

L'équipement de protection peut être positionné dynamiquement au moyen d'actionneurs électromécaniques, mécatroniques ou fluidiques. Cet équipement de protection peut être solidaire d'une rotule procurant trois degrés de liberté et elle-même actionnable en translation depuis l'avant du véhicule.

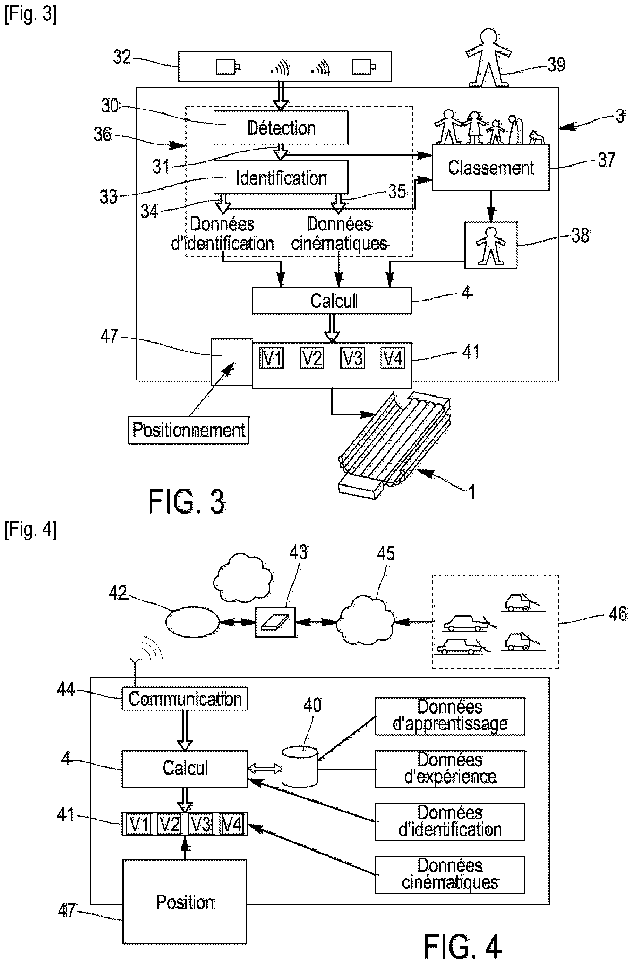

En référence à la figure 3, un système de commande de déploiement 3 selon l'invention, intégré dans un équipement de protection piéton d'un véhicule, comprend une unité 30 de détection programmée pour délivrer des données de détection 31 d'un obstacle piéton apparaissant soudainement devant le véhicule, à partir du traitement de signaux issus d'un ensemble 32 de capteurs équipant le véhicule.

Le système de commande 3 comprend en outre une unité 33 pour identifier cet obstacle 39 comme étant un piéton et pour déterminer la cinématique par rapport au véhicule de ce piéton ainsi identifié. Cette unité d'identification 33 traite les données de détection 31 et délivre en retour des données d'identification 34 et des données de cinématique 35.

Il est à noter que les unités de détection 30 et d'identification 33 peuvent être parties intégrantes d'un système 36 d'aide à la conduite équipant le véhicule.

Le système de commande 3 comprend en outre une unité de classement 37 prévue pour traiter les données de détection 31 et d'identification 34 en vue de classer l'obstacle 39 ainsi détecté et identifié dans une catégorie de piéton donnée 38 parmi un ensemble prédéterminé de catégories de piéton.

L'unité de classement 37 et l'unité d'identification 33 alimentent une unité 4 de calcul d'une stratégie de déploiement qui est programmée pour délivrer des signaux de commande sélective de positionnement 47 d'une structure gonflable externe 1 de sécurité équipant le véhicule, et de remplissage 41 d'un ensemble de sacs gonflables 42 constitutifs de celle ci 1.

Il est à noter que l'unité de classement 37 et l'unité de calcul 4 peuvent être partie intégrante d'un même calculateur au sein du système de commande 3. On pourrait même envisager une intégration totale ou partielle des unités de détection, d'identification, de classement et de calcul, au sein d'un unique composant électronique intégré.

En référence à la figure 4, l'unité de calcul 4 met en oeuvre une base de données 40 et un module de communication 44, via un ou plusieurs réseaux de communication sans fil 42, avec un serveur 43 opérant en mode « cloud » 45.

La base de données 40 est agencée pour stocker des données d'apprentissage collectées (i) lors de phases de mise au point et d'évaluation des systèmes de protection piéton ou (ii) à partir d'événements de détection d'obstacle piéton et de déploiement de structures gonflables dans des véhicules connectés 46 équipés de systèmes de protection piéton, ou (iii) à partir de données récoltées via un ou plusieurs réseaux de communication sans fil 42, avec un serveur 43 opérant en mode « cloud » 45.

L'unité de calcul 4 met en oeuvre des techniques d'intelligence artificielle exploitant (i) des données d'apprentissage stockées dans la base de données 40, (ii) des données délivrées par l'unité de classement 37, et(iii) des données de cinématique délivrées par l'unité d'identification 33. L'unité de calcul 4 génère en retour une séquence de signaux 41, 47de commande sélective de l'ensemble du système de protection.

Le système de commande de déploiement selon l'invention tel qu'illustré par les figures 3 et 4 est connecté à un système de vision 32 équipant le véhicule et pouvant comprendre :
- des caméras avant courte et longue portée
- des caméras infra rouge (0-30m)
- des Lidars (0-100m)
- des capteurs ultrason (proximité)
- des Radars (30 100m)
- des capteurs ultrason (proximité)

Dans certains cas et pour plus de fiabilité et de rapidité, le système de commande selon l'invention peut disposer en outre de moyens propres en vision diurnes et nocturne. Par exemple, une caméra placée en haut du pare-brise, peut suivre le mouvement du piéton pendant la phase de mise en oeuvre du système de protection.

Le système de commande de déploiement 3 tel que représenté schématiquement en figure 3 reçoit et analyse en permanence les données du véhicule et celles de son environnement. Lorsqu'il identifie une situation dangereuse, il peut alors déclencher une manoeuvre d'évitement, le freinage d'urgence et si nécessaire, engager les phases successives du déploiement des systèmes de protection.

Ces phases sont activées par des signaux électriques délivrés par le système automatisé en fonction de la situation analysée par lui. Grâce à l'analyse de l'ensemble des données reçues avant et pendant un événement critique par les différents capteurs du système de pilotage d'un véhicule autonome ou du système d'aide à la conduite d'un système mobile, le système automatisé apporte une réponse spécifique à chaque configuration d'accident.

Ce système de commande de positionnement et de déploiement, grâce à son Intelligence Artificielle, pilote l'activation dans l'espace et dans le temps (spatio-temporel) d'un seul système de protection ou d'une combinaison de plusieurs systèmes de protection dont le véhicule est équipé.

Contrairement aux systèmes de l'art antérieur qui déclenchent une fois pour toutes l'activation des coussins d'air à partir d'algorithmes prédéfinis lors de la détection du choc, le système de commande de déploiement ajuste la réponse du système de protection à partir des informations reçues avant et pendant le choc.

Des informations issues des capteurs équipant le système d'aide à la conduite d'un véhicule peuvent intervenir sur l'équipement de protection piéton lui-même après son déploiement. Par exemple, une caméra placée en haut du pare-brise, peut intervenir dans la mise en oeuvre et le déploiement de la structure gonflable.

L'ensemble de ces données sont fusionnées et mises en commun dans le système de commande de déploiement selon l'invention.

Ainsi le système de commande de déploiement selon l'invention s'enrichit et s'améliore de façon constante avec l'expérience de tous. Dans un premier temps, le système de commande de déploiement va déterminer la vitesse à l'impact avec le véhicule. Si celle-ci est non nulle, il active le système de protection piéton.

Les données multi-capteurs sont fusionnées pour l'identification de l'obstacle piéton. Elles doivent être homogène selon les différentes sources. Seules les données nécessaires ou contribuant à l'identification de l'obstacle piéton sont traitées.

L'unité d'identification 33 telle que représentée en figure 3 est par exemple configurée pour réaliser les opérations suivantes :
- localisation de l'obstacle piéton: coordonnées X/Y/Z (ou ρ/θ/ϕ),
- identification de la nature de l'obstacle piéton: enfant, femme, homme, autre : animal objet..,
- identification de la corpulence : grand, gros, petit : estimation de la taille et du poids,
- détection de la position de l'obstacle piéton: debout, couché, penché, accroupi, de profil, en l'air,
- détection du mouvement: à pied, en bicyclette, en gyropode, en patins à roulette, en skate-board ou planche à roulettes, en motocyclette, ou en tout autre moyen de déplacement,
- Estimation de trajectoire: face, perpendiculaire, parallèle, ou angle par rapport à la trajectoire de la voiture,
- détermination de vitesse relative par rapport au véhicule et position à t=0,5s par exemple,
- identification d'éléments du paysage proche, nature et trajectoire : voiture, camion, motocyclette/bicyclette, trottoir, mur etc,
- détermination de l'assiette du véhicule par rapport au sol,
- éventuellement, suivi de la cinématique du piéton.

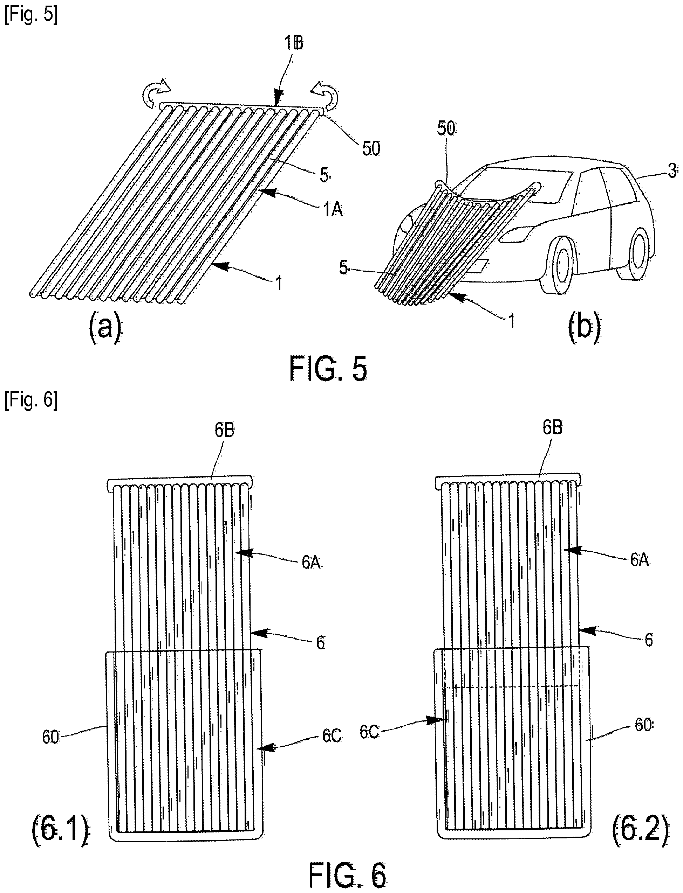

En référence à la figure 5, la structure gonflable 1 comprend une première partie 1A constituée d'un ensemble de sacs gonflables 5 adjacents parallèlement l'un à l'autre de façon à créer un matelas gonflable et une seconde partie 1B constituée d'un sac gonflable 50 disposé transversalement contre un bord d'extrémité de ce matelas. Pour obtenir un effet d'enveloppement, le sac s'arque sous l'effet de la pression en référence à la figure 5b, cet effet étant obtenu par une structure anisotropique du sac avec une épaisseur différente entre la face avant et arrière.

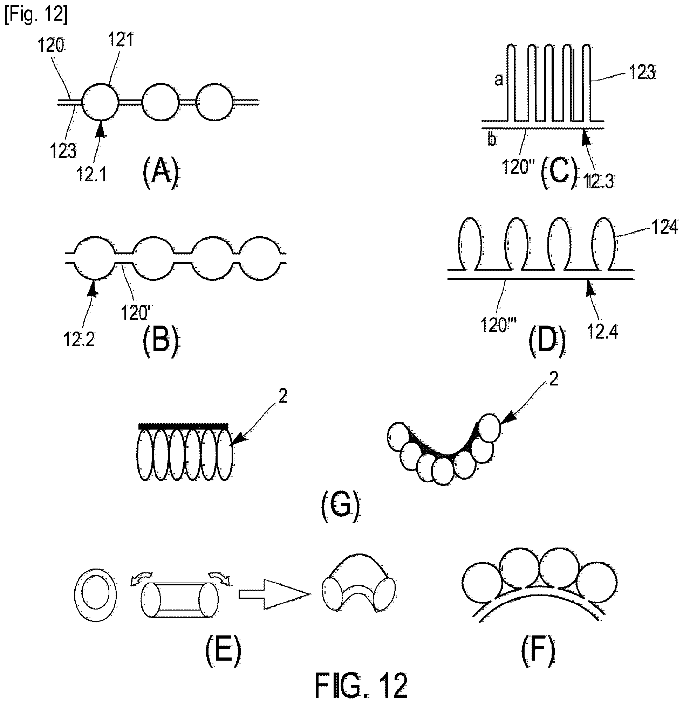

Comme cela sera décrit ci-après en référence à la figure 12, les sacs gonflables 5 sont agencés de sorte qu'ils puissent communiquer entre eux à partir d'orifices d'entrée pourvus d'une valve/évent ou d'une vanne.

Il est à noter que les vannes et valves/évents peuvent être remplacées par des générateurs de gaz indépendants.

Dans une autre configuration d'une structure gonflable mise en oeuvre dans un équipement de protection piéton selon l'invention, illustrée par les figures 6.1 et 6.2, la structure gonflable 6 comprend une première partie centrale ou sac 6A, une seconde partie supérieure ou sac supérieur 6B (identique à la partie 1B de la figure 5(a)) et une troisième partie inférieure ou sac inférieur 6C.

Les première et troisième parties ou sacs 6A, 6C présentent une structure de matelas gonflable. La partie ou sac 6A est analogue à la partie 1A de la figure 5(a) tandis que la seconde partie ou sac 6B est identique à la partie 1B de la figure 5(a). Les deux parties ou sacs 6A, 6C sont pressurisées indépendamment via des vannes distinctes.

Un sac supplémentaire 60 peut être aussi prévu pour enserrer le sac 6C pour lui conférer une rigidité supplémentaire, il peut être anisotropique comme le sac 6B.

La rigidité apportée par le sac en U de C permet de maintenir dans la structure gonflable une personne dont le centre de gravité après prise en charge est en dessous de la rotule. Celle-ci peut être conçue pour relever la partie inférieure du sac. Ce dispositif est aussi capable de prendre en charge des personnes au sol.

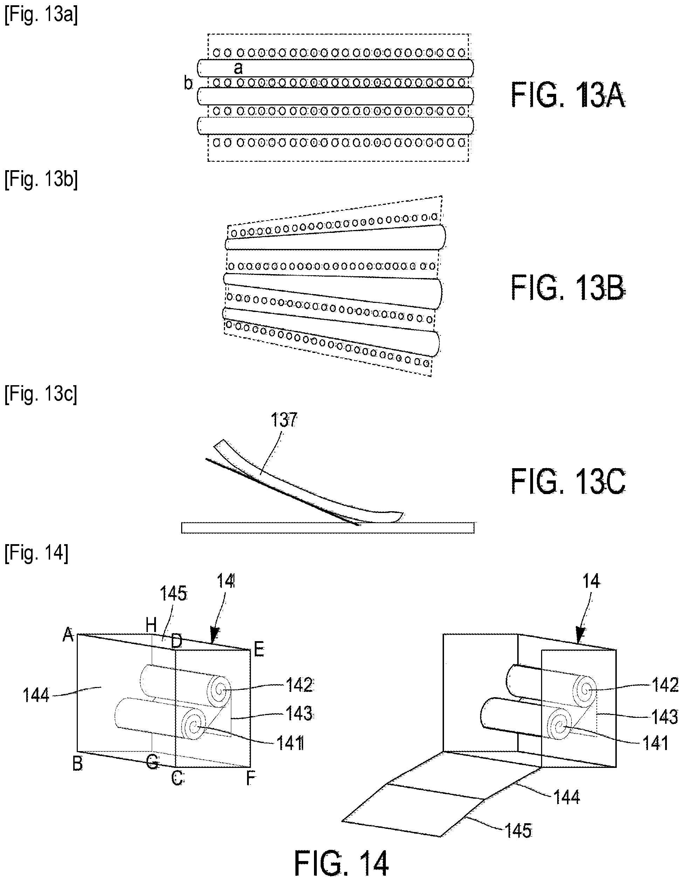

Comme illustré plus haut, les structures gonflables 6A ou 6A+6C peuvent être anisotropes pour obtenir une forme courbe des structures cette configuration est favorable en cas de risque de projection. La surface supérieure est renforcée par rapport à la surface intérieure. Ce renfort peut être modulé pour privilégier certaines zones. De même la structure peut être trapézoïdale en référence à la figure 13.

Plus généralement la géométrie des sacs de la structure gonflable peut recevoir des adaptations en fonction du véhicule ou d'une stratégie particulière.

Différentes adaptations peuvent être envisagées dans le cadre de la présente invention. Par exemple la présence dans la structure gonflable de sacs transversaux au milieu de la zone de gonflage peut s'avérer favorable.

On peut aussi prévoir, en référence à la figure 6.2, que les sacs 6A et 6C soient en recouvrement partiel afin d'assurer une meilleure protection du piéton par la structure gonflable 6 en son centre.

Les sacs 1B ou 6B peuvent être prolongés latéralement et ils peuvent être anisotropiques pour « relever » le sac.

Les structures gonflables mises en oeuvre dans les équipements de protection piéton sont constituées de sacs de forme généralement cylindrique assemblés et communicants par des évents régulés.

A titre d'exemple, la structure gonflable de la figure 5a est constituée d'une structure principale 1A de dimension 140X 220 cm qui comporte 14 sacs de forme tubulaire de longueur 220cm et de diamètre 6cm. Une bande de 4 cm réunit les sacs entre eux.

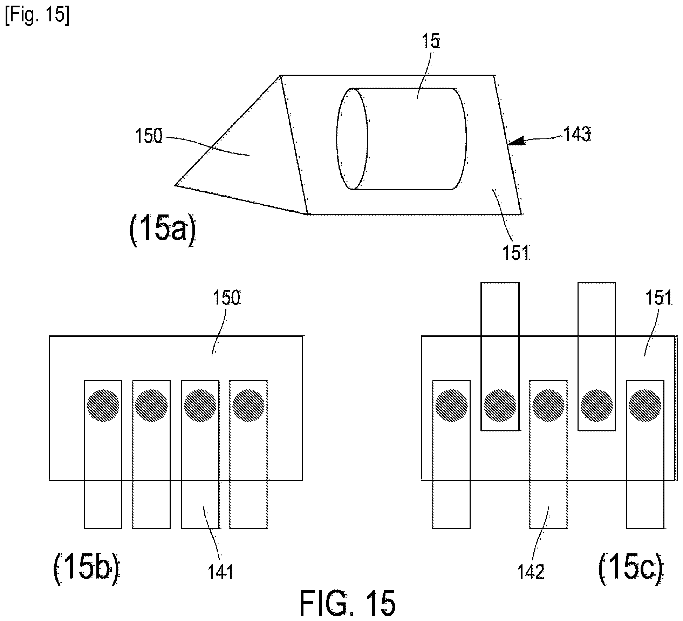

La structure gonflable de la figure 6 est constituée de deux sacs 6A ; 6C avec pour dimensions nominales 110x140cm. Les sacs 6A et 6C peuvent se chevaucher au niveau de leur intersection, pour créer une zone de protection renforcée à ce point critique, en référence aux figures 6.2 et 15.

Une des solutions préférées pour la construction de ces sacs est de préformer les sacs à partir deux bandes de tissu (figure 12). Les parties intermédiaires entre les sacs 120 sont soudées étanches mais ces soudures ne sont pas continues, et des passages sont aménagés pour positionner les vannes ou évents assurant la communication entre les sacs 120' (figure 12B). Les plis peuvent être symétriques 121, 122 (figure 12(A)) ou dissymétriques 123, 124 (figures 12(C) et 12(D)). Dans ce dernier cas, la distance entre sacs peut être réduite pour assurer un cintrage de la structure gonflable, en référence à la figure 12(F).

La forme du sac 1B représenté en figure 5 est anisotropique selon une configuration illustrée par la figure 12(E). Le sac 1B est rigide en face avant, souple en face arrière. Il se replie dans la partie haute des sacs centraux pour refermer la structure gonflable (figure 5(b)), permettant ainsi un maintien du piéton sur la structure gonflable (non représentée). D'autres technologies de cintrage de la structure gonflable sont possibles, en particulier celle représentée fig 12(f).

Le sac 1B est pressurisé en corrélation avec la cinématique du piéton.

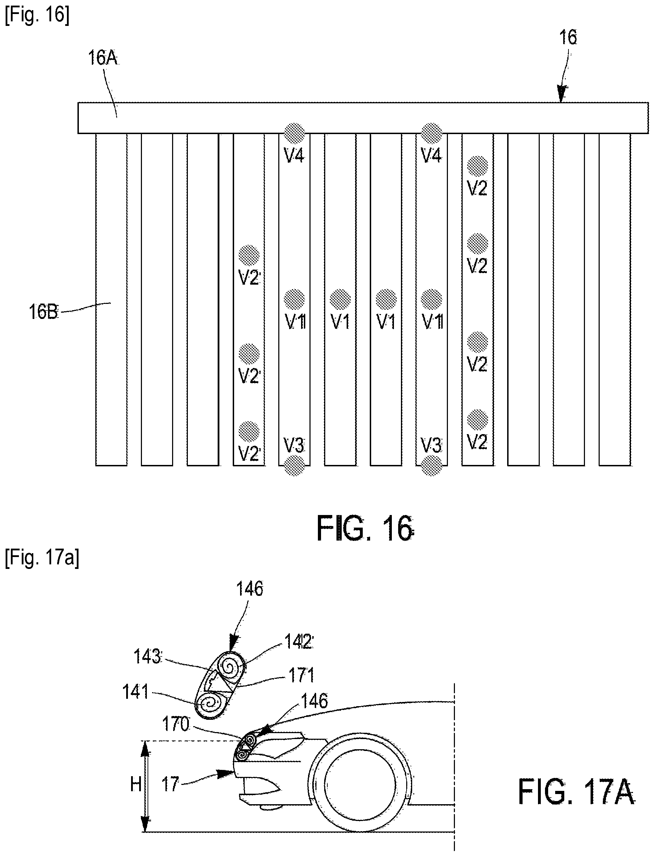

La figure 16 illustre un exemple de répartition des vannes : quatre ou cinq vannes V1 transmettent les gaz issus du générateur de gaz (non représenté) aux quatre ou cinq sacs centraux de la structure gonflable. Ces sacs communiquent entre eux par des passages libres entre les sacs. Quatre vannes V2 alimentent les deux premiers sacs latéraux 16B, les autres communiquent entre eux par des passages libres. Les vanne V4 alimentent le sac 16A. Il en est de même pour le sac 16C avec les vannes V3.

Les figures 13A, 13B et 13C illustrent différentes possibilités de conformation des structures gonflables. On peut ainsi prévoir une forme trapézoïdale par élargissement progressif des bandes inter sacs (13B). Avec deux toiles d'épaisseur différentes, il est possible d'incurver/cintrer la structure gonflable 137, en référence à la figure 13C.

Les sacs peuvent être réalisés en PVC (Polychlorure de Vinyle) ou tous autres matériaux du type de ceux utilisés pour la réalisation de canots pneumatiques de type Zodiac^{®}. D'autres matériaux sont possibles, par exemple le Nylon 6x6 enduit Néoprène ou Silicone. Dans certains cas le polyuréthane peut être aussi utilisé.

Dans une autre configuration, les sacs seuls sont placés à l'intérieur d'une matrice en tissu assurant la forme de la structure gonflable. La matrice en tissu s'ajuste aux besoins de protection mécanique des sacs et des formes recherchées. Dans ce cas, le Nylon 6x6 enduit Néoprène ou liant silicone est privilégié, mais le polyuréthane est aussi possible. Cette technique permet de séparer la fonction de pressurisation de celles de la tenue mécanique et de la forme de la structure gonflable. Cette configuration permet d'utiliser des matériaux ayant différentes rugosités.

En référence aux figures 14 et 15, le module de protection 14 contient une structure gonflable 141, 142 et un générateur de gaz 15 conditionné dans un boitier étanche 143 solidaire du module 14 et sur lequel est fixée la structure gonflable 141, 142.

Le module de protection est fixé sur une rotule solidaire du véhicule éventuellement par l'intermédiaire d'un vérin (figures 1 et 2) et qui permet son orientation spatiale contrôlée en x,y,z.

Le boîtier 143 contenant le générateur de gaz a une forme de prisme de section triangulaire (figure 15(a)). Une première face 150 (figure 15(b)) de ce boîtier 143 constitue une première platine supportant les différentes vannes qui communiquent avec les sacs de la partie inférieure 141 et 151 de la structure gonflable.

Les sacs, du type de ceux décrits en figures 5 ou 6, sont pliés en trois longitudinalement. Un premier groupe de quatre ou cinq sacs centraux reçoivent directement les gaz au travers des vannes V1, alors que des groupes respectivement de quatre ou cinq sacs, repliés sur ce premier groupe, seront alimentés par quatre vannes ou évents V2.

La structure gonflable représentée en figure 14 est repliée en deux enroulements (« langue de belle-mère »), l'un se déployant vers l'avant guidé par une plateforme créée à l'ouverture du module, l'autre se déployant en hauteur vers le capot du véhicule.

Ainsi la structure gonflable est prévue pour se déployer d'abord axialement puis latéralement. Les autres sacs 16A,16C de la structure sont alimentés par les évents ou vannes V3 et V4.

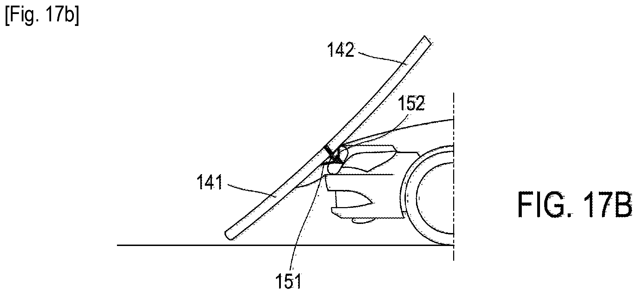

Le module de protection a pour dimensions 40 cmX20 cm, profondeur de 20 à 30cm. Cette forme peut s'ajuster à la configuration de la face avant véhicule, comme l'illustre les figures 17A et 17B.

### Les générateurs de gaz

Pour assurer le déploiement de la structure, plusieurs technologies sont possibles :
- le générateur de gaz comporte comme seule composition de propergol dont les caractéristiques balistiques sont ajustées pour assurer une combustion complète en plus de 50 millisecondes ;
- le générateur de gaz comporte une seule composition constituée par un mélange d'au moins une charge oxydante et d'au moins une charge réductrice, dont la décomposition est pilotée par un dispositif énergisant configuré pour assurer une génération complète des gaz en plus de 50 millisecondes ;
- le générateur de gaz comporte une première chambre contenant du propergol solide, et une deuxième chambre contenant une deuxième composition constituée par un mélange d'au moins une charge oxydante et d'au moins une charge réductrice, ledit propergol solide formant un bloc dont l'épaisseur et les caractéristiques chimiques sont ajustés pour assurer une combustion complète des gaz en plus de 50 millisecondes.

A titre d'exemple, le générateur de gaz a les caractéristiques suivantes :

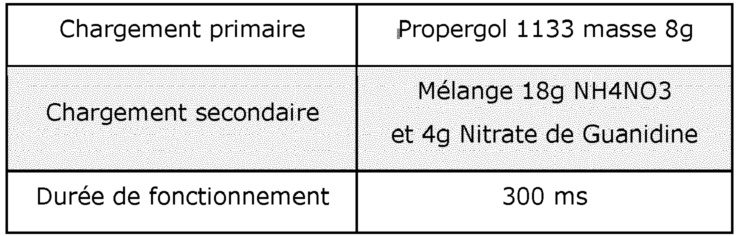

Cette dernière solution a l'avantage de délivrer des gaz neutres chimiquement et sans poussières.

Des gaz comprimés ou un compresseur peuvent aussi être utilisés seuls ou en complément d'un générateur de gaz décrits ci-dessus.

A titre d'exemple, les pressions dans l'équipement de protection décrit sont pour le module 1MPA, (10 bars), et pour les sacs 0,02 à 0,05 MPA relatifs en termes de rapport de la pression extérieure sur la pression intérieure.

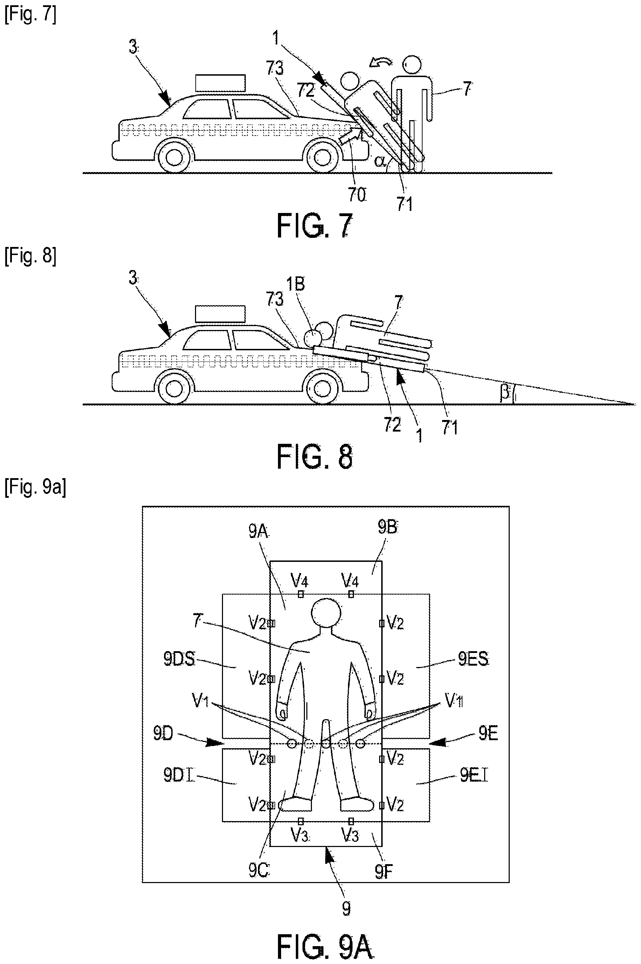

On va maintenant décrire, en référence aux figures 7 et 8, un processus de déploiement d'un équipement de protection piéton intégré dans un véhicule 10, après détection d'un piéton en la personne d'un adulte 7.

Les systèmes de détection équipant le véhicule 10, tels que les caméras, lidars et radars ont préalablement détecté un piéton. Des algorithmes installés dans une unité de calcul au sein du système d'aide à la conduite du véhicule 10 ont identifié ce piéton comme étant un humain adulte 7. La cinématique de cet humain a été déterminée par rapport à celle du véhicule 10. Les données de détection, d'identification ont permis de classer le piéton dans une catégorie pour laquelle des données d'expérience ont été préalablement stockées dans une base de données embarquée au sein du véhicule 10. L'unité de calcul génère alors, en fonction de la catégorie de classement, des signaux de commande sélective vers un module de sécurité disposé dans la face avant du véhicule 10.

Ce module de sécurité est fixé sur une rotule, qui elle même peut être positionnée sur un vérin qui le déplace vers l'avant, en référence à la figure 2.

Le temps nécessaire au déploiement initial de la structure gonflable 1 doit être tel que la cette structure gonflable soit déployée avant d'atteindre le piéton. Lorsque la partie inférieure 71 entre en contact avec le bas du corps du piéton, celui-ci bascule sur la partie centrale 72 de la structure gonflable 1 et se trouve plaqué contre elle du fait de la vitesse du véhicule 10.

Dans un second temps, en référence à la figure 8, le sac 1B de la structure gonflable1 est déployée de façon à protéger la tête du piéton 7 et le maintenir sur le véhicule jusqu'à son arrêt.

Bien d'autres stratégies de déploiement peuvent être envisagées dans le cadre de la présente invention.

Ainsi, dans un cas pratique, après identification d'un risque de collision, et la mise en oeuvre de manoeuvre d'évitement avec en outre l'activation freinage d'urgence, le système identifie la collision avec un piéton comme inévitable.

Les ordres de grandeurs de la cinématique d'un choc sont :
- à une vitesse de 35Km/h soit 10m/s environ, en freinage d'urgence dans les conditions ordinaires, le temps d'arrêt est estimé à 1 à 1,5s, et la distance d'arrêt est estimée à 4,5 à 6m,
- le temps de déploiement de la structure gonflable est de 300ms sa pression interne, 0,12-0,15MPA,
- la rotule de structure gonflable est située à 0,5m du sol, l'angle est de 30° par rapport à l'axe du véhicule, ce qui amène le point de contact piéton structure gonflable à 1 m du véhicule,
- l'ordre d'activation de la structure gonflable est donné à 4m du véhicule, 400ms avant l'impact s'il n'y avait pas de système de protection.

Les données cinématiques de vision fournies par le système permettent de calculer la distance d'arrêt. Si celle ci n'est pas suffisante pour éviter la collision, le système de protection doit être activé.

Comme il sera montré dans la suite, il est possible de réduire le temps d'activation du système à 150ms. Dans ce cas l'ordre d'activation de la structure gonflable est donné à 2,5m du véhicule, 250ms avant l'impact s'il n'y avait pas de système de protection.

L'expérience cumulée de l'utilisation effective d'équipements de protection piéton et les échanges d'expériences amèneront un perfectionnement du système de commande de déploiement selon l'invention. A titre d'exemple non limitatif, la structure gonflable mise en oeuvre dans les trois exemples suivants illustrés par les figures 9A, 9B, 10A, 10B, 11A, 11B, est constituée d'une partie centrale constituée de deux sacs indépendants 9A 9C alimentés par les vannes V1, de quatre parties latérales 9DS, 9DI, 9ES, 9EI alimentées par les vannes V2.

L'espace entre deux sacs est diminué pour obtenir un effet d'enveloppement selon la figure 12(F), et de deux structures axiales ou sacs axiaux 9B 9F de part et d'autre de la partie centrale, alimentées par les vannes V3 et V4.

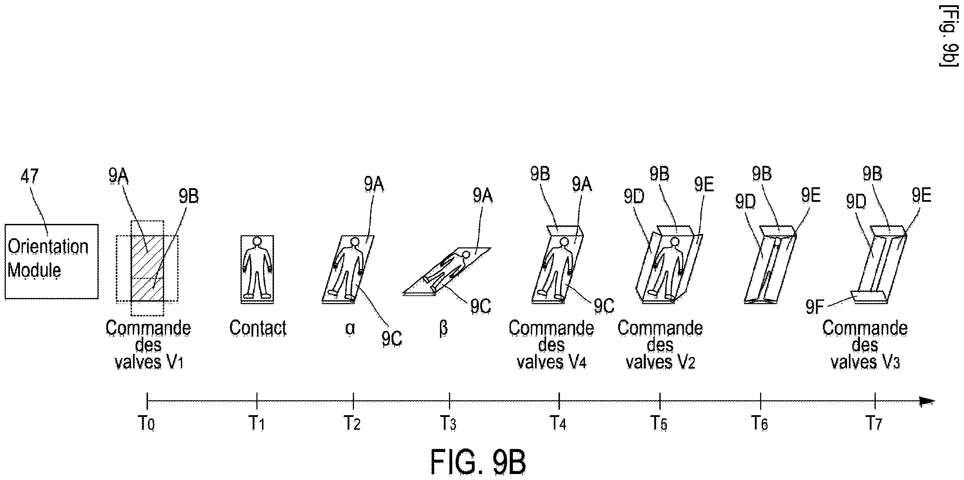

On va ainsi décrire, en référence aux figures 9A et 9B, un processus de déploiement sélectif d'une structure gonflable extérieure au sein d'un équipement de protection piéton selon l'invention, dans une situation d'identification d'un homme adulte. La configuration étudiée peut être celle d'un adulte 7 de 1.75m, 80 kg, immobile centré sensiblement sur le véhicule, à une distance de 4 m de la voiture. Le freinage d'urgence est déclenché et la vitesse initiale du véhicule est 35 km/h.

En référence à la figure 9B, on considère à un instant initial To une commande sélective des vannes V1 pour gonfler à partir du générateur de gaz uniquement les parties centrales supérieure et inférieure 9A, 9C. En même temps ou préalablement, une commande sélective a orienté le module axialement et latéralement pour optimiser la prise en charge du piéton. La structure gonflable 9 entre en contact à un instant T1 avec un obstacle piéton, typiquement un l'homme 7. A un instant T2 séparé de l'instant T1 de quelques dizaines de millisecondes, l'homme 7 est retenu contre les deux parties centrales gonflées 9A, 9C qui présentent un angle initial α par rapport à la route. A un instant suivant T3, la structure gonflable 9 bascule vers le capot du véhicule selon un second angle β. A un instant suivant T4 déterminé par l'unité de calcul, les vannes V4 sont commandées sélectivement pour provoquer le gonflage de la partie d'extrémité supérieure 9B et ainsi retenir l'homme 7 et l'empêcher de partir en avant. A un instant suivant T5 également déterminé par l'unité de calcul, les vannes V2 sont alors commandées sélectivement pour gonfler les parties latérales 9D et 9E qui sont agencées pour se replier vers les parties centrales 9A, 9C jusqu'à envelopper au moins partiellement l'homme 7 (instant T6). Enfin l'unité de calcul émet à un instant T7 une commande sélective des vannes V3 pour injecter du gaz dans la partie d'extrémité inférieure 9F jusqu'à la gonfler et ainsi empêcher l'homme 7 pris en charge de glisser vers le bas.
La commande sélective peut modifier la séquence des opérations en ordre et durée. Par exemple, la commande de la vanne V3 peut être activée avec celle de la vanneV1 si la structure gonflable doit être renforcée pour la prise en charge du piéton.

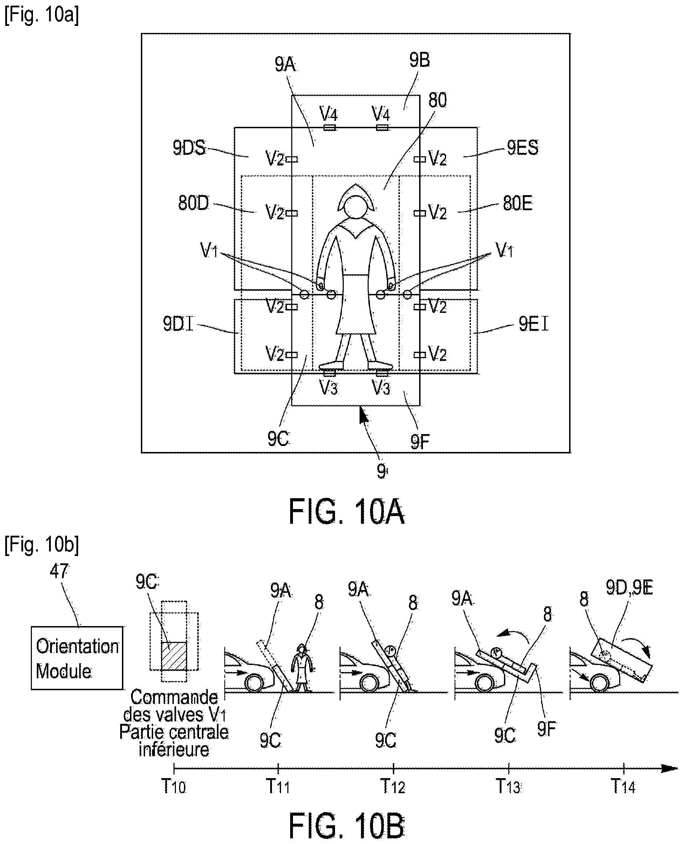

On va maintenant décrire, en référence aux figures 10A et 10B, un exemple de mise en oeuvre d'un équipement de protection piéton intégrant la structure gonflable de la figure 9A, dans le cas d'une détection et d'une prise en charge d'une femme de petite taille ou de petit gabarit 1,6m 60kg par une structure gonflable du type décrite plus haut.

L'identification préalable de cet obstacle piéton aura conduit à la classer dans une catégorie spécifique qui va correspondre à une commande sélective particulière des vannes équipant la structure.

Cet obstacle piéton va se distinguer de l'obstacle piéton « homme de grande taille » principalement par le fait que son bassin est situé plus bas et que son poids est inférieur. Pour assurer une protection efficace de cet obstacle piéton, il est important qu'il puisse être bien pris en charge par la structure gonflable et ne rebondisse pas contre celle-ci.

Dans ce but, après impact, lorsque la vitesse relative piéton véhicule s'annule, les vannes V2 des sacs 9D, 9E vont s'ouvrir pour réduire la surpression dans le sac 9A et ainsi éviter le rebond. Dans cette configuration, la caméra située au niveau du rétroviseur est particulièrement utile.

Pour maintenir le piéton de faible gabarit sur le véhicule, le gonflement de la partie d'extrémité inférieure 9F sera privilégié.

Ainsi, on considère qu'à un instant T10, en réponse à une identification de l'obstacle piéton 8 et son classement dans la catégorie « femme de petit gabarit », l'unité de calcul a émis une commande sélective de positionnement du module et des vannes V1 contrôlant le gonflage de la partie centrale inférieure 9C. A un instant T11, cette partie centrale inférieure9C, gonflée à un niveau de pression suffisant pour en assurer une rigidité prédéterminée, entre en contact avec les membres inférieurs de l'obstacle piéton 8. Quelques millisecondes plus tard, à un instant T12, des vannes V1 contrôlant le gonflage de la partie centrale supérieure 9A sont commandées pour accueillir le corps du piéton 8. La structure gonflable 9 bascule (instant T13) par effet dynamique, tandis que des vannes V3 de gonflage de la partie d'extrémité inférieure 9F sont activées pour maintenir le piéton 8 sur la structure gonflable 9. A un instant T14, les parties latérales 9D, 9E sont ensuite gonflées par commande sélective des vannes V2 de façon à privilégier un gonflement supérieur d'une zone d'impact 80 adaptée à la morphologie de l'obstacle humain 8 pris en charge.

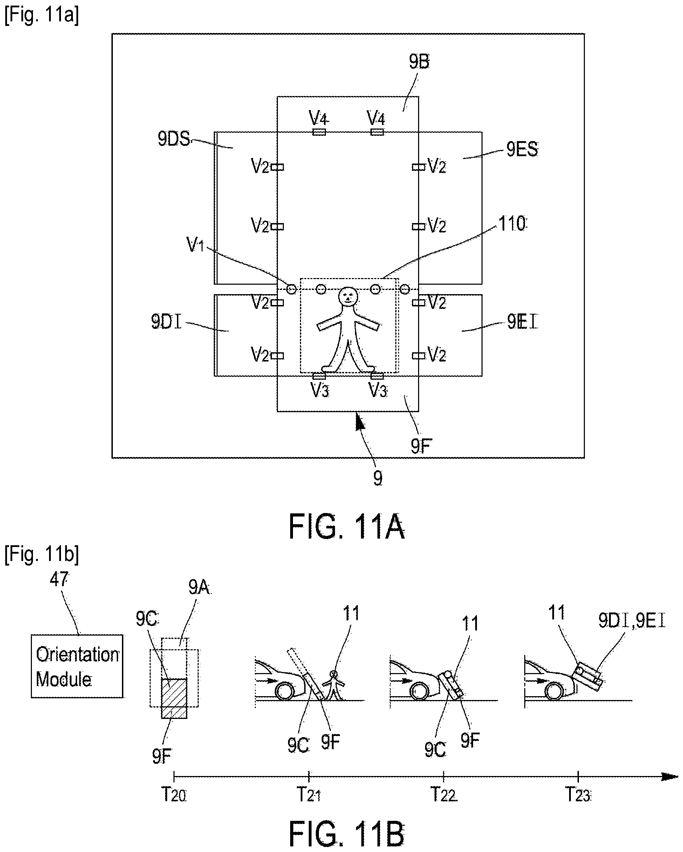

On va maintenant décrire, en référence aux figures 11A et 11B, un exemple particulier de prise en charge d'un piéton identifié et classé en tant que petit enfant 0,70m, 11-12Kg par une structure gonflable du type de celle décrite plus haut.

Dans cette configuration, il est vital que l'enfant ne passe pas sous le véhicule. Pour cela, à un instant T20, les parties respectivement centrale inférieure 9C et d'extrémité inférieure 9F sont gonflées par activation de vannes V1 de façon à constituer une barrière (instant T21) et une zone gonflée sélectivement 110 contre laquelle l'enfant 11 va se placer au moment du contact (instant T22). et être sensiblement soulevé Soit par la rotule, soit/ou par un sac latéral en U 60 anisotropique fig6 Parallèlement, les parties latérales inférieures 9DI, 9EI sont gonflées de façon à complètement entourer l'enfant 11 et ainsi le protéger au mieux contre les risques externes.

Dans une configuration correspondant à un piéton enfant, par exemple un enfant de 10 ans (1.30m, 30 kg), le sac se déploie, mais le centre de gravité de la personne est proche de la rotule. Pour que le centre de gravité de l'enfant soit au dessus de la rotule, et donc sécuriser le basculement de l'enfant sur le capot, au moment du contact (instant T22), celui-ci doit être sensiblement soulevé. Cela peut être réalisé soit par la rotule, soit/ou par un sac latéral en U 60 anisotropique, en référence à la figure 6.

Parallèlement, les parties latérales inférieures 9DI, 9EI sont gonflées de façon à complètement entourer l'enfant 11 et ainsi le protéger au mieux contre les risques externes.

### Cas d'usage 1

On considère une structure gonflable du type représenté en figure 16 ou en figure 5, de dimension 140X 220 cm. Cette structure comporte 14 sacs de forme tubulaire de diamètre 6 cm et de longueur 220cm; Les vannes commandées sont indiquées par V1 et V3 en référence à la figure 16, tandis que les autres sont des valves non régulées. Les valves V4 sont des trous calibrés pour différer la pressurisation du sac 16A.

Le piéton considéré dans ce cas d'usage est un adulte de hauteur 1,75m, de corpulence 75kg, il est debout face au véhicule.

L'ordre de déploiement est donné lorsque le piéton est à 4m du véhicule à un instant initial T=0 et que le véhicule est à 35Km/h. La distance d'arrêt du véhicule est supérieure à cette distance.

Les ordres sont les suivants :
- ajuster la position du module et activer le générateur de gaz,
- activer les vannes V1, décider pour les vannes V3 en fonction de la configuration.

La structure gonflable qui est opérationnelle et entre en contact avec le piéton T=300ms. Le sac 16A est pressurisé progressivement à partir des autres sacs de la structure principale ou par un générateur indépendant.

Le piéton bascule sur la structure gonflable et sa tête est en contact à T=450-500ms avec la structure gonflable.

L'arrêt du véhicule intervient à T=1000ms

Dans ce cas la commande sélective réalise les étapes suivantes :
- sélection du délai d'initiation du générateur de gaz couplé avec les vannes V1,
- ordre de correction de la position du module,
- ouverture ou non de la vanne V3 en fonction de la configuration du poids du piéton, de la rugosité du sol analysée par les moyens de détection.

### Cas d'usage 2

On considère la même configuration que dans le cas d'usage 1 mais le piéton est en mouvement et le système de commande de déploiement le prévoit décalé par rapport au centre de véhicule.

La rotule assurera la position du module selon la direction du véhicule et latéralement pour centrer la structure gonflable sur le piéton. Le système peut aussi avoir les vannes V2 commandées et privilégier un premier coté.

### Cas d'usage 3

On considère la même configuration que dans le cas d'usage 1 avec une structure gonflable du type décrit en figure 6 ou en figures 17A, 17B.

L'ordre de déploiement T =0 est donné lorsque le piéton est à 2,5m du véhicule.

Les ordres sont les suivants :
- ajuster la position du module et activer le générateur de gaz,
- activer les vannes V1C et les vannes V3. La structure gonflable C est opérationnelle et entre en contact avec le piéton à une instant T=150ms.
- activer les vannes V1B, de sorte que le sac 16A est pressurisé progressivement.

Le piéton bascule alors sur la structure gonflable et sa tête est en contact à un instant T=300-350ms

L'arrêt du véhicule intervient à un instant T+1000ms.

La commande sélective n'a alors plus d'ordre à donner.

### Cas d'usage 4

Le système utilise dans cette dernière configuration une caméra placée au niveau du rétroviseur d'un véhicule doté d'un équipement de protection selon l'invention, pour optimiser les déploiements des sacs avec la cinématique du piéton. En fonction de la morphologie et du poids du piéton, il est possible de rigidifier ou amollir le sac 16B et d'optimiser le gonflage du sac 16A.

L'équipement de protection selon l'invention peut ainsi traiter les configurations suivantes ;
- le piéton est en mouvement par rapport au véhicule (jogging),
- le piéton est en mouvement par rapport au véhicule bicyclette, rollers, trottinette, mono-roues,

D'autres configurations d'obstacle piéton peuvent être envisagées: groupe de plusieurs piétons, personne avec poussette ou landau...

On va maintenant décrire schématiquement, en référence aux figures 17A et 17B, un exemple d'implantation d'un équipement de protection piéton 146 selon l'invention dans la face avant d'un véhicule 17. Cet équipement de protection 146 est disposé à une hauteur d'environ 50 cm par rapport au sol, immédiatement derrière la partie supérieure 170 de la calandre du véhicule 17.

L'équipement de protection piéton 146 comporte, au sein d'une enceinte étanche, 171 les deux parties 141, 142 enroulées de la structure gonflable et un module générateur de gaz 143 logé dans un boitier de forme prismatique et contenant un générateur de gaz et une platine de gonflage à laquelle sont fixés les différents sacs des deux parties 141, 142.

Lorsque le système de commande de déploiement (non représenté en figures 17A, 17B) équipant le véhicule 17 transmet à l'équipement de protection 146 des signaux de commande en réponse à une identification d'obstacle piéton, le module générateur de gaz est déplacé par un ou plusieurs actionneurs (non représentés) de façon à assurer un positionnement approprié de la structure gonflable dont les deux parties principales 141, 142 sont gonflés sélectivement et progressivement à partir du générateur de gaz via les vannes disposées sur les deux platines du module générateur 143.

La partie inférieure 141 est gonflée rigidement de telle manière qu'elle s'étende depuis la partie supérieure de la calandre jusqu'au sol afin d'assurer un accueil du piéton en sécurité tandis que la partie supérieure 142 est gonflée rigidement de telle manière qu'elle s'étende depuis la partie supérieure de la calandre sensiblement jusqu'au haut du pare-brise afin d'empêcher que le piéton entre en contact avec ce pare-brise.

Bien entendu, l'invention n'est pas limitée aux exemples qui viennent d'être décrits et de nombreuses autres configurations sont envisageables dans le cadre de la présente invention. En particulier, la structure gonflable externe peut comporter un nombre de sacs différent celui qui vient d'être décrit. Les dimensions de ces sacs peuvent aussi être adaptées à des usages spécifiques. Par ailleurs, le nombre de vannes ou de valves peut être différent de ce qui vient d'être décrit et adapté au nombre et à la configuration des sacs constituant la structure gonflable externe. Les vitesses, distances ne sont données qu'à titre d'exemple, le système de protection peut s'adapter à tout objet mobile et dans une large gamme de vitesse.

Les obstacles qui peuvent être pris en charge par des équipements de protection piéton selon l'invention ne sont pas limités à des piétons humains débout ou couchés, mais peuvent aussi comprendre des animaux ou des objets de toute nature se trouvant soudainement devant un véhicule.

Enfin, le système de commande de déploiement selon l'invention peut aussi être mis en oeuvre pour commander sélectivement le gonflage de sacs airbags intérieurs à l'habitacle du véhicule qui pourront ainsi bénéficier des capacités d'intelligence artificielle mobilisées pour la commande sélective de structures gonflables externes.

## Revendications

1. Procédé pour commander le déploiement d'une structure gonflable externe de sécurité (1, 6, 9, 141-142) équipant un véhicule (3, 30, 17), comprenant :
- une étape de détection d'apparition soudaine d'un obstacle (39, 7, 8, 11) devant ledit véhicule (3, 30, 17), à partir d'un traitement de signaux issus d'un ou plusieurs capteurs (32) équipant ledit véhicule (3, 30, 17), conduisant à produire des données de détection (31),
- une étape d'identification dudit obstacle (39, 7, 8, 11) comme étant un être humain ou animal et de localisation spatiale dynamique dudit être humain ou animal, à partir d'un traitement des données de détection (31), conduisant à produire des données d'identification (34) et des données de localisation spatiale dynamique (35),
- une étape de calcul d'une stratégie de déploiement de ladite structure gonflable externe (1, 6, 9, 141-142), à partir des données d'identification (34) et des données de localisation spatiale dynamique (35), conduisant à générer des signaux de commande sélective (i) de gonflage d'une pluralité de sacs gonflables (1A-1B, 6A-6B-6C, 141-142) constituant ladite structure gonflable externe de sécurité et (ii) de positionnement dynamique de ladite structure gonflable(1, 6, 9, 141-142),
**caractérisé en ce que** les sacs gonflables peuvent communiquer entre eux via des vannes ou évents, et **en ce que** les signaux de commande sélective sont agencés de façon à ce que ladite structure gonflable externe ainsi déployée reçoive ledit être humain ou animal et le retienne en son sein pendant une durée prédéterminée.

2. Procédé de commande de déploiement selon la revendication 1, **caractérisé en ce qu'**il comprend en outre une étape de classement comportant un traitement des données de détection (31) et/ou d'identification (34, 35), agencée de façon à classer (37) le piéton (39) ainsi identifié dans une catégorie de piéton, parmi une pluralité de catégories de piéton prédéterminées, et **en ce que** ledit classement est aussi pris en compte dans le calcul de la stratégie de déploiement.

3. Procédé de commande de déploiement selon l'une des revendications 1 ou 2, **caractérisé en ce que** les étapes de détection et d'identification sont réalisées au sein d'un système (36) d'assistance à la conduite équipant le véhicule.

4. Procédé selon la revendication 3, **caractérisé en ce qu'**il est mis en oeuvre au cours d'une séquence automatique de freinage d'urgence initiée en réponse à une détection d'obstacle (39) devant le véhicule (3, 30, 17).

5. Procédé selon l'une quelconque des revendications précédentes, **caractérisé en ce que** l'étape de classement comporte en outre un traitement de données d'expérience préalablement stockées dans une base de données d'apprentissage (40) embarquée dans le véhicule (3, 30, 17) ou accessible à distance depuis ledit véhicule (3, 30, 17).

6. Procédé selon la revendication 5, **caractérisé en ce que** la base de données d'apprentissage (40) est alimentée, via un réseau de communication (42) auquel le véhicule (3, 30, 17) est connecté, par des données d'expérience collectées dans une communauté de véhicules (46) équipés de systèmes de protection des piétons implémentant le procédé de commande de déploiement selon l'une quelconque des revendications précédentes.

7. Procédé selon la revendication 2, **caractérisé en ce que** les étapes de classement et de calcul de stratégie de déploiement sont réalisées au sein d'un système d'intelligence artificielle embarqué dans le véhicule.

8. Équipement de protection piéton prévu pour équiper un véhicule (3, 30, 17), mettent en oeuvre le procédé de commande de déploiement selon l'une quelconque des revendications 1 à 7, comprenant :
- une structure gonflable externe de sécurité (1, 6, 9, 141-142) agencée pour être déployée depuis l'avant dudit véhicule (3, 30, 17) en réponse à une détection et à une identification d'un piéton (39, 7, 8, 11) apparaissant soudainement devant ledit véhicule (3, 30, 17),
- un dispositif générateur de gaz (15) prévu pour gonfler ladite structure gonflable externe de sécurité (1, 6, 9, 141-142),
- un système (3) pour commander le déploiement de ladite structure gonflable externe de sécurité (1),
**caractérisé en ce que** ladite structure gonflable externe (1, 6, 9, 141-142) comporte une pluralité de sacs gonflables (1A-1B, 6A-6B-6C) pouvant communiquer entre eux via des vannes ou évents et dont les gonflages respectifs par du gaz issu dudit générateur de gaz (15) sont commandés sélectivement par ledit système de commande (3) selon une stratégie de déploiement calculée à partir de données de détection et/ou d'identification dudit piéton (39, 7, 8, 11), de façon à recevoir et retenir pendant une durée prédéterminée ledit piéton (39, 7, 8, 11) au sein de ladite structure gonflable externe (1, 6, 9, 141-142).

9. Equipement de protection selon la revendication 8, caractérisé en que les sacs gonflables sont pourvus de vannes de remplissage commandées à partir d'un module de commande implémentant une stratégie de déploiement calculée par un système d'intelligence artificielle embarqué dans le véhicule.

10. Equipement de protection selon l'une des revendications 8 ou 9, **caractérisé en ce que** la structure gonflable externe (141-142) est stockée enroulée dans un module de protection (14) disposé à l'intérieur du véhicule (17) et agencé (i) pour être déplacé, en réponse à une commande de déploiement, au-delà de la face avant dudit véhicule (17) et (ii) pour être positionné dynamiquement de sorte que la structure gonflée (141-142) recueille le piéton.

11. Equipement de protection selon la revendication 10, **caractérisé en ce qu'**il comprend en outre un dispositif actionneur pour positionner dynamiquement le module de protection.

12. Equipement de protection selon la revendication 11, **caractérisé en ce que** le dispositif actionneur comprend une rotule actionnée procurant un réglage tridimensionnel dynamique de la position de la structure gonflable pendant et/ou après son déploiement.

13. Equipement de protection selon l'une quelconque des revendications 8 à 12, **caractérisé en ce que** le système de commande comprend :
- des moyens (30) pour détecter une apparition soudaine d'un obstacle (39, 7, 8, 11) devant ledit véhicule (3, 30, 17), à partir d'un traitement de signaux issus d'un ou plusieurs capteurs (32) équipant ledit véhicule (3, 30, 17),
- des moyens (33) pour identifier ledit obstacle (39, 7, 8, 11) comme étant un être humain ou animal, à partir d'un traitement de signaux issus d'un ou plusieurs capteurs parmi ladite pluralité de capteurs (32),
- des moyens pour délivrer des données de localisation spatiale dynamique dudit obstacle piéton détecté et identifié,
**caractérisé en ce qu'**il comprend en outre des moyens (4) pour calculer, à partir desdites données d'identification (34) et de localisation spatiale dynamique (35), une stratégie de déploiement (i) prévue pour générer des signaux (41) de commande sélective de gonflage d'une pluralité de sacs gonflables pouvant communiquer entre eux via des vannes ou évents et constituant ladite structure gonflable externe de sécurité (1) et des signaux (47) de commande de positionnement dynamique de ladite structure gonflable externe (1), lesdits sacs gonflables étant agencés et commandés sélectivement de sorte que ladite structure gonflable externe ainsi déployée reçoive ledit être humain ou animal et le retienne en son sein pendant une durée prédéterminée.

14. Equipement de protection selon la revendication 13, **caractérisé en ce que** le système de commande comprend en outre des moyens (37) pour classer l'obstacle piéton humain ou animal ainsi identifié (39), dans une catégorie (38) d'obstacle piéton parmi une pluralité de catégories d'obstacle prédéterminées, et **en ce que** les moyens de calcul (4) sont agencés pour prendre aussi en compte ladite catégorie (38) d'obstacle dans le calcul de la stratégie de déploiement.

15. Equipement de protection selon la revendication 14, **caractérisé en ce que** les moyens de détection (30) et les moyens d'identification (33) sont intégrés au sein d'un système d'assistance à la conduite (36) équipant le véhicule(3, 30, 17).

16. Equipement de protection selon l'une des revendications 14 ou 15, **caractérisé en ce qu'**il comprend en outre une base de données d'apprentissage (40) embarquée dans le véhicule (3, 30, 17) ou accessible à distance depuis ledit véhicule (3, 30, 17), prévue pour stocker des données d'expérience exploitables par les moyens de classement (37).

17. Equipement de protection selon la revendication 16, **caractérisé en ce que** le système de commande est connecté à un système distant de partage d'expérience au sein d'une communauté de véhicules pourvus d'équipements de protection piéton intégrant des systèmes de commande de déploiement selon l'une quelconque des revendications 7 à 9.

18. Equipement de protection selon la revendication 14, **caractérisé en ce que** les moyens de classement (37) et les moyens de calcul (4) de stratégie de déploiement sont intégrés au sein d'un système d'intelligence artificielle embarqué dans le véhicule.

## Patentansprüche

1. Verfahren zum Steuern der Entfaltung einer äußeren aufblasbaren Sicherheitsstruktur (1, 6, 9, 141-142), mit der ein Fahrzeug (3, 30, 17) ausgestattet ist, umfassend:
- einen Schritt zum Erfassen des plötzlichen Auftauchens eines Hindernisses (39, 7, 8, 11) vor dem Fahrzeug (3, 30, 17), ausgehend von einer Verarbeitung von Signalen, die von einem oder mehreren Sensoren (32) stammen, mit denen das Fahrzeug (3, 30, 17) ausgestattet ist, was zur Erzeugung von Erfassungsdaten (31) führt,
- einen Schritt zum Identifizieren des Hindernisses (39, 7, 8, 11) als Mensch oder Tier und zum dynamischen räumlichen Lokalisieren des Menschen oder Tieres, ausgehend von einer Verarbeitung der Erfassungsdaten (31), was zum Erzeugen von Identifikationsdaten (34) und dynamischen räumlichen Lokalisierungsdaten (35) führt,
- einen Schritt zum Berechnen einer Entfaltungsstrategie der äußeren aufblasbaren Struktur (1, 6, 9, 141-142) anhand der Identifikationsdaten (34) und der dynamischen räumlichen Lokalisierungsdaten (35), was zur Erzeugung von Signalen zur selektiven Steuerung (i) des Aufblasens einer Vielzahl von Airbags (1A-1B, 6A-6B-6C, 141-142), die die äußere aufblasbare Sicherheitsstruktur bilden, und (ii) der dynamischen Positionierung der aufblasbaren Struktur (1, 6, 9, 141-142) führt,
**dadurch gekennzeichnet, dass** die Airbags über Ventile oder Entlüftungsöffnungen miteinander in Verbindung stehen können, und dass die selektiven Steuersignale so angeordnet sind, dass die so entfaltete äußere aufblasbare Struktur den Menschen oder das Tier aufnimmt und für eine vorbestimmte Zeitdauer in sich zurückhält.

2. Verfahren zur Steuerung der Entfaltung nach Anspruch 1,
**dadurch gekennzeichnet, dass** es außerdem einen Klassifizierungsschritt umfasst, der eine Verarbeitung der Erfassungs- (31) und/oder Identifikationsdaten (34, 35) umfasst, die so angeordnet ist, dass der so identifizierte Fußgänger (39) in eine Fußgängerkategorie aus einer Vielzahl von vorbestimmten Fußgängerkategorien klassifiziert (37) wird, und dass die Klassifizierung auch bei der Berechnung der Entfaltungsstrategie berücksichtigt wird.

3. Verfahren zur Steuerung der Entfaltung nach einem der Ansprüche 1 oder 2, **dadurch gekennzeichnet, dass** die Schritte der Erfassung und Identifizierung innerhalb eines Fahrerassistenzsystems (36) durchgeführt werden, mit dem das Fahrzeug ausgestattet ist.

4. Verfahren nach Anspruch 3, **dadurch gekennzeichnet, dass** es während einer automatischen Notbremssequenz durchgeführt wird, die als Reaktion auf die Erkennung eines Hindernisses (39) vor dem Fahrzeug (3, 30, 17) eingeleitet wird.

5. Verfahren nach einem der vorstehenden Ansprüche,
**dadurch gekennzeichnet, dass** der Klassifizierungsschritt außerdem eine Verarbeitung von Erfahrungsdaten umfasst, die zuvor in einer Lerndatenbank (40) gespeichert wurden, die sich an Bord des Fahrzeugs (3, 30, 17) befindet oder auf die entfernt vom Fahrzeug (3, 30, 17) aus zugegriffen werden kann.

6. Verfahren nach Anspruch 5, **dadurch gekennzeichnet, dass** die Lerndatenbank (40) über ein Kommunikationsnetz (42), mit dem das Fahrzeug (3, 30, 17) verbunden ist, mit Erfahrungsdaten gespeist wird, die in einer Gemeinschaft von Fahrzeugen (46) gesammelt wurden, die mit Fußgängerschutzsystemen ausgestattet sind, die das Verfahren zur Steuerung der Entfaltung nach einem der vorstehenden Ansprüche implementieren.

7. Verfahren nach Anspruch 2, **dadurch gekennzeichnet, dass** die Schritte der Klassifizierung und der Berechnung der Entfaltungsstrategie innerhalb eines im Fahrzeug eingebetteten Systems der künstlichen Intelligenz durchgeführt werden.

8. Fußgängerschutzausrüstung, die für die Ausstattung eines Fahrzeugs (3, 30, 17) vorgesehen ist und das Verfahren zur Steuerung der Entfaltung nach einem der Ansprüche 1 bis 7 durchführt, umfassend:
- eine äußere aufblasbare Sicherheitsstruktur (1, 6, 9, 141-142), die so angeordnet ist, dass sie von der Vorderseite des Fahrzeugs (3, 30, 17) als Reaktion auf die Erfassung und Identifizierung eines plötzlich vor dem Fahrzeug (3, 30, 17) auftauchenden Fußgängers (39, 7, 8, 11) entfaltet wird,
- eine Gasgeneratorvorrichtung (15), die zum Aufblasen der äußeren aufblasbaren Sicherheitsstruktur (1, 6, 9, 141-142) vorgesehen ist,
- ein System (3) zur Steuerung der Entfaltung der genannten äußeren aufblasbaren Sicherheitsstruktur (1),
**dadurch gekennzeichnet, dass** die äußere aufblasbare Struktur (1, 6, 9, 141-142) eine Vielzahl von Airbags (1A-1B, 6A-6B-6C) umfasst, die über Ventile oder Entlüftungsöffnungen miteinander in Verbindung stehen können und deren jeweiliges Aufblasen mit Gas aus dem Gasgenerator (15) selektiv durch das Steuersystem (3) gemäß einer Entfaltungsstrategie gesteuert wird, die anhand von Daten zur Erfassung und/oder Identifizierung des Fußgängers (39, 7, 8, 11) berechnet wird, um den Fußgänger (39, 7, 8, 11) innerhalb der äußeren aufblasbaren Struktur (1, 6, 9, 141-142) aufzunehmen und für eine vorbestimmte Zeit zurückzuhalten.

9. Schutzausrüstung nach Anspruch 8, **dadurch gekennzeichnet, dass** die Airbags mit Füllventilen versehen sind, die von einem Steuermodul aus gesteuert werden, das eine Entfaltungsstrategie implementiert, die von einem im Fahrzeug befindlichen System künstlicher Intelligenz berechnet wird.

10. Schutzausrüstung nach einem der Ansprüche 8 oder 9,
**dadurch gekennzeichnet, dass** die äußere aufblasbare Struktur (141-142) aufgerollt in einem Schutzmodul (14) gelagert ist, das im Inneren des Fahrzeugs (17) angeordnet und so beschaffen ist, dass es (i) in Reaktion auf einen Entfaltungsbefehl über die Vorderseite des Fahrzeugs (17) hinaus bewegt und (ii) dynamisch so positioniert werden kann, dass die aufgeblasene Struktur (141-142) den Fußgänger aufnimmt.

11. Schutzausrüstung nach Anspruch 10, **dadurch gekennzeichnet, dass** sie außerdem eine Betätigungsvorrichtung zum dynamischen Positionieren des Schutzmoduls umfasst.

12. Schutzausrüstung nach Anspruch 11, **dadurch gekennzeichnet, dass** die Betätigungsvorrichtung ein betätigtes Kugelgelenk umfasst, das eine dynamische dreidimensionale Einstellung der Position der aufblasbaren Struktur während und/oder nach ihrer Entfaltung bereitstellt.

13. Schutzausrüstung nach einem der Ansprüche 8 bis 12,
**dadurch gekennzeichnet, dass** das Steuersystem Folgendes umfasst:
- Mittel (30) zum Erkennen eines plötzlichen Auftretens eines Hindernisses (39, 7, 8, 11) vor dem Fahrzeug (3, 30, 17), ausgehend von einer Verarbeitung von Signalen, die von einem oder mehreren Sensoren (32) stammen, mit denen das Fahrzeug (3, 30, 17) ausgestattet ist,
- Mittel (33) zum Identifizieren des Hindernisses (39, 7, 8, 11) als Mensch oder Tier, basierend auf der Verarbeitung von Signalen von einem oder mehreren Sensoren aus der Vielzahl von Sensoren (32),
- Mittel zur Ausgabe von dynamischen räumlichen Lokalisierungsdaten des erfassten und identifizierten Fußgängerhindernisses,
**dadurch gekennzeichnet, dass** sie außerdem Mittel (4) umfasst, um anhand der Identifikationsdaten (34) und der dynamischen räumlichen Lokalisierungsdaten (35) eine Entfaltungsstrategie (i) zu berechnen, die dazu vorgesehen ist, Signale (41) zur selektiven Steuerung des Aufblasens einer Vielzahl von Airbags, die über Ventile oder Entlüftungen miteinander in Verbindung stehen können und die die äußere aufblasbare Sicherheitsstruktur (1) bilden, und Signale (47) zur Steuerung der dynamischen Positionierung der äußeren aufblasbaren Struktur (1) zu erzeugen, wobei die Airbags so angeordnet sind und selektiv gesteuert werden, dass die so entfaltete äußere aufblasbare Struktur den Menschen oder das Tier aufnimmt und für eine vorbestimmte Zeitdauer in sich zurückhält.

14. Schutzausrüstung nach Anspruch 13, **dadurch gekennzeichnet, dass** das Steuersystem außerdem Mittel (37) umfasst, um das so identifizierte menschliche oder tierische Fußgängerhindernis (39) in eine Fußgängerhinderniskategorie (38) aus einer Vielzahl von vorbestimmten Hinderniskategorien zu klassifizieren, und dass die Berechnungsmittel (4) so angeordnet sind, dass sie bei der Berechnung der Entfaltungsstrategie auch die Hinderniskategorie (38) berücksichtigen.

15. Schutzausrüstung nach Anspruch 14, **dadurch gekennzeichnet, dass** die Erkennungsmittel (30) und die Identifikationsmittel (33) in ein Fahrerassistenzsystem (36) integriert sind, mit dem das Fahrzeug(3, 30, 17) ausgestattet ist.

16. Schutzausrüstung nach einem der Ansprüche 14 oder 15,
**dadurch gekennzeichnet, dass** sie außerdem eine Lerndatenbank (40) umfasst, die in dem Fahrzeug (3, 30, 17) eingebaut ist oder auf die entfernt vom Fahrzeug (3, 30, 17) aus zugegriffen werden kann und die dazu vorgesehen ist, Erfahrungsdaten zu speichern, die von den Klassifizierungsmitteln (37) ausgewertet werden können.

17. Schutzausrüstung nach Anspruch 16, **dadurch gekennzeichnet, dass** das Steuersystem mit einem Remote-System zum Erfahrungsaustausch innerhalb einer Gemeinschaft von Fahrzeugen verbunden ist, die mit Fußgängerschutzausrüstungen ausgestattet sind, die Systeme zur Steuerung der Entfaltung nach einem der Ansprüche 7 bis 9 integrieren.

18. Schutzausrüstung nach Anspruch 14, **dadurch gekennzeichnet, dass** die Klassifizierungsmittel (37) und die Berechnungsmittel (4) der Entfaltungsstrategie in ein System künstlicher Intelligenz integriert sind, das im Fahrzeug eingebaut ist.

## Claims

1. A method for controlling the deployment of an external inflatable safety structure (1, 6, 9, 141-142) fitted to a vehicle (3, 30, 17), comprising:
- a step for detecting the sudden appearance of an obstacle (39, 7, 8, 11) in front of said vehicle (3, 30, 17), based on the processing of signals from one or more sensors (32) fitted to said vehicle (3, 30, 17), resulting in the production of detection data (31),
- a step of identifying said obstacle (39, 7, 8, 11) as being a human being or animal and of dynamically locating said human being or animal, from a processing of the detection data (31), leading to the production of identification data (34) and dynamic spatial location data (35),
- a step for calculating a deployment strategy for said external inflatable structure (1, 6, 9, 141-142), on the basis of identification data (34) and dynamic spatial location data (35), leading to the generation of selective control signals (i) for inflating a plurality of airbags (1A-1B, 6A-6B-6C, 141-142) constituting said external inflatable safety structure and (ii) for dynamically positioning said inflatable structure (1, 6, 9, 141-142),
**characterized in that** the airbags can communicate with each other via valves or vents, and **in that** the selective control signals are arranged so that said external inflatable structure thus deployed receives said human or animal and retains it therein for a predetermined duration.

2. The deployment control method according to claim 1, **characterized in that** it further comprises a classification step comprising the processing of detection (31) and/or identification (34, 35) data, arranged so as to classify (37) the pedestrian (39) thus identified in a pedestrian category, from among a plurality of predetermined pedestrian categories, and **in that** said classification is also taken into account in calculating the deployment strategy.

3. The deployment control method according to one of claims 1 or 2, **characterized in that** the steps of detection and identification are carried out within a driver assistance system (36) fitted to the vehicle.

4. The method according to claim 3, **characterized in that** it is implemented during an automatic emergency braking sequence initiated in response to detecting an obstacle (39) in front of the vehicle (3, 30, 17).

5. The method according to any one of the preceding claims, **characterized in that** the step of classification further comprises the processing of experience data previously stored in a learning database (40) on-board the vehicle (3, 30, 17) or remotely accessible from said vehicle (3, 30, 17).

6. The method according to claim 5, **characterized in that** the learning database (40) is populated, via a communication network (42) to which the vehicle (3, 30, 17) is connected, by experience data collected from a community of vehicles (46) fitted with pedestrian protection systems implementing the deployment control method according to any of the preceding claims.

7. The method according to claim 2, **characterized in that** the steps of deployment strategy classification and calculation are carried out within an artificial intelligence system onboard the vehicle.

8. A pedestrian protection device intended to be fitted to a vehicle (3, 30, 17), implementing the deployment control method according to any one of claims 1 to 7, comprising:
- an external inflatable safety structure (1, 6, 9, 141-142) arranged to be deployed from the front of said vehicle (3, 30, 17) in response to the detection and identification of a pedestrian (39, 7, 8, 11) suddenly appearing in front of said vehicle (3, 30, 17),
- a gas-generating device (15) for inflating said external inflatable safety structure (1, 6, 9, 141-142),
- a system (3) for controlling the deployment of said external inflatable safety structure (1),
**characterized in that** said external inflatable structure (1, 6, 9, 141-142) comprises a plurality of inflatable bags (1A-1B, 6A-6B-6C) which can communicate with each other via valves or vents and whose respective inflation by gas from said gas generator (15) is selectively controlled by said control system (3) according to a deployment strategy calculated from detection and/or identification data of said pedestrian (39, 7, 8, 11), so as to receive and retain for a predetermined time said pedestrian (39, 7, 8, 11) within said external inflatable structure (1, 6, 9, 141-142).

9. The protection device according to claim 8, **characterized in that** the airbags are provided with filling valves controlled from a control module implementing a deployment strategy calculated by an artificial intelligence system on-board the vehicle.

10. The protection device according to one of claims 8 or 9, **characterized in that** the external inflatable structure (141-142) is stored rolled up in a protection module (14) disposed inside the vehicle (17) and arranged (i) to be moved, in response to a deployment command, beyond the front face of said vehicle (17) and (ii) to be dynamically positioned so that the inflated structure (141-142) catches the pedestrian.

11. The protection device according to claim 10, **characterized in that** it further comprises an actuator device for dynamically positioning the protective module.

12. The protection device according to claim 11, **characterized in that** the actuator device comprises an actuated ball joint providing dynamic three-dimensional adjustment of the position of the inflatable structure during and/or after its deployment.

13. The protection device according to any one of claims 8 to 12, **characterized in that** the control system comprises:
- means (30) for detecting the sudden appearance of an obstacle (39, 7, 8, 11) in front of said vehicle (3, 30, 17), based on the processing of signals from one or more sensors (32) fitted to said vehicle (3, 30, 17),
- means (33) for identifying said obstacle (39, 7, 8, 11) as being a human or animal, from processing signals from one or more of said plurality of sensors (32),
- means for outputting dynamic spatial location data of said detected and identified pedestrian obstacle,
**characterized in that** it further comprises means (4) for calculating, on the basis of said identification (34) and dynamic spatial location (35) data, a deployment strategy (i) designed to generate selective inflation control signals (41) for a plurality of airbags which can communicate with one another via valves or vents and constitute said external inflatable safety structure (1), and dynamic positioning control signals (47) for said external inflatable structure (1), said inflatable bags being selectively arranged and controlled so that said external inflatable structure thus deployed receives said human being or animal and retains it therein for a predetermined duration.

14. The protection device according to claim 13, **characterized in that** the control system further comprises means (37) for classifying the animal or human pedestrian obstacle thus identified (39), in a pedestrian obstacle category (38) among a plurality of predetermined obstacle categories, and **in that** the calculation means (4) are arranged to also take said obstacle category (38) into account in calculating the deployment strategy.

15. The protection device according to claim 14, **characterized in that** the detection means (30) and the identification means (33) are integrated within a driver assistance system (36) fitted to the vehicle (3, 30, 17).

16. The protection device according to one of claims 14 or 15, **characterized in that** it further comprises a learning database (40) on-board the vehicle (3, 30, 17) or accessible remotely from said vehicle (3, 30, 17), designed to store experience data usable by the classification means (37).

17. The protection device according to claim 16, **characterized in that** the control system is connected to a remote system for sharing experiences within a community of vehicles equipped with pedestrian protection equipment incorporating deployment control systems according to any one of claims 7 to 9.

18. The protection device according to claim 14, **characterized in that** the means for deployment strategy classification (37) and calculation (4) are carried out within an artificial intelligence system on-board the vehicle.
